# EUROPÄISCHE PATENTSCHRIFT

(11) **EP 1 442 958 B1**
(45) Veröffentlichungstag und Bekanntmachung des Hinweises auf die Patenterteilung: **06.08.2008**
(21) Anmeldenummer: 04001897.0
(22) Anmeldetag: 29.01.2004
(51) Int. Cl.: B62D 1/16, B62D 5/04

(54) **Lenksystem für ein Kraftfahrzeug**
Steering system for a motor vehicle
Système de direction pour véhicule à moteur

(30) Priorität: 01.02.2003 DE 10304015
(43) Veröffentlichungstag der Anmeldung: 04.08.2004
(73) Patentinhaber: ADAM OPEL AG, 65423 Rüsselsheim (DE)
(72) Erfinder: Bielaczek, Christian, 61118 Bad Vilbel (DE); Hilkert, Hans-Jürgen, 64521 Gross-Gerau (DE); Klein, Andreas, 61352 Bad Homburg (DE)

(56) Entgegenhaltungen:
- EP-A- 0 987 163
- WO-A-01/70555
- DE-A- 4 031 316
- DE-A- 10 132 259

## Beschreibung

Die Erfindung betrifft ein Lenksystem für ein Kraftfahrzeug mit den Merkmalen des Oberbegriffs des Patentanspruchs 1.

Aus dem Stand der Technik sind verschiedene Lenksysteme zur Unterstützung bzw. Beeinflussung der von einem Fahrer des Kraftfahrzeugs auf ein Lenkrad des Kraftfahrzeugs ausgeübten Lenkparameter, nämlich Lenkmoment und Lenkwinkel, bekannt.

So offenbart die DE 42 39 831 C2 ein Lenksystem zur Unterstützung eines vom Fahrer auf das Lenkrad ausgeübten Lenkmoments. Mit einem derartigen Lenksystem muss der Fahrer weniger Kraft ausüben, um den gewünschten Lenkvorgang zu bewirken. Das Lenksystem gemäß DE 42 39 831 C2 überlagert demnach dem vom Fahrer auf das Lenkrad ausgeübten Lenkmoment ein zusätzliches Lenkmoment, welches je nach technischer Ausführung auf elektrischem oder hydraulischem Wege erzeugt wird. Ein Lenksystem gemäß DE 42 39 831 C2 bezeichnet man auch als Power Steering System.

DE 199 57 984 A1 offenbart ein Lenksystem zur Beeinflussung eines vom Fahrer auf das Lenkrad ausgeübten Lenkwinkels. Mit einem derartigen Lenksystem kann auf den vom Fahrer ausgeübten Lenkwinkel durch Überlagerung eines Korrekturwinkels so eingegriffen werden, dass die Fahrsicherheit erhöht wird. Das Lenksystem gemäß DE 199 57 984 A1 überlagert demnach dem vom Fahrer auf das Lenkrad ausgeübten Lenkwinkel einen zusätzlichen Lenkwinkel. Ein Lenksystem gemäß DE 199 57 984 A1 bezeichnet man auch als Active Steering System.

Ein Lenksystem für ein Kraftfahrzeug mit den Merkmalen des Oberbegriffs des Patentanspruchs 1 ist aus der WO 01/70555 A1 bekannt. In dieser ist ein servounterstütztes Lenksystem eines Kraftfahrzeugs beschrieben, wobei das Lenksystem ein Lenkrad zur Vorgabe eines gewünschten Lenkwinkels der Räder des Kraftfahrzeugs, Fahrdynamikmittel zur Überlagerung des Lenkwinkels mit einem Korrekturwinkel, wobei der Korrekturwinkel nach dem Gesichtspunkt einer Erhöhung der Fahrstabilität und/oder des Fahrkomforts des Kraftfahrzeugs ermittelt wird, und einen Servoantrieb aufweist. Bei diesem Lenksystem ist der Servoantrieb als eine variable Momentenunterstützung ausgebildet, wobei der Grad der Momentenunterstützung von der Geschwindigkeit des Kraftfahrzeugs und von mindestens einer den Korrekturwinkel charakterisierenden Größe der Fahrdynamikmittel abhängig ist. - Mit Hilfe des Servoantriebs ist es möglich, die Leistungsfähigkeit der Fahrdynamikmittel über den gesamten Geschwindigkeitsbereich des Kraftfahrzeugs nahezu konstant zu halten. Dadurch kann die Fahrstabilität und der Fahrkomfort des Kraftfahrzeugs besonders schnell und zuverlässig erhöht werden.

Hiervon ausgehend liegt der vorliegenden Erfindung das Problem zu Grunde, ein verbessertes Lenksystem für ein Kraftfahrzeug zu schaffen.

Dieses Problem wird durch ein Lenksystem gelöst, das gemäß den Merkmalen des Patentanspruchs 1 ausgebildet ist. Im ersten Fall bleiben Lenkkorrekturen dem Fahrer verborgen, im zweiten Fall werden Lenkkorrekturen dem Fahrer rückgemeldet.

Bevorzugte Weiterbildungen der Erfindung ergeben sich aus den abhängigen Unteransprüchen und der nachfolgenden Beschreibung. Ausführungsbeispiele der Erfindung werden unter Bezugnahme auf die Zeichnung näher erläutert. In der Zeichnung zeigt:
- Fig. 1:: ein Lenksystem für ein Kraftfahrzeug nach dem Stand der Technik in schematisierter Darstellung,
- Fig. 2:: ein weiteres Lenksystem für ein Kraftfahrzeug nach dem Stand der Technik in schematisierter Darstellung, und
- Fig. 3:: ein erfindungsgemäßes Lenksystem für ein Kraftfahrzeug in schematisierter Darstellung.

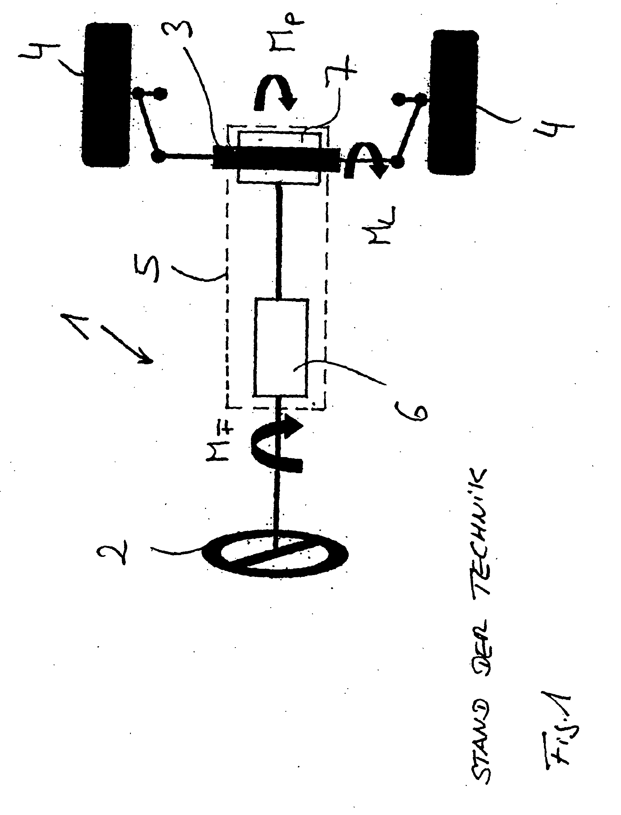

Figur 1 zeigt ein Lenksystem 1 nach dem Stand der Technik. Das Lenksystem 1 verfügt über eine Lenkeinrichtung 2, nämlich ein Lenkrad, mit Hilfe dessen ein Fahrer ein Fahrer-Lenkmoment M_{F} auf ein Lenkgetriebe 3 ausübt. Am Lenkgetriebe 3 greifen zu beiden Seiten Räder 4 des Kraftfahrzeuges an, die letztendlich über die Lenkeinrichtung beeinflusst werden sollen. Zur Unterstützung bzw. Beeinflussung des vom Fahrer ausgeübten Fahrer-Lenkmoments M_{F} verfügt das Lenksystem gemäß Figur 1 über eine Lenkmoment-Steuereinrichtung 5.

Die in Figur 1 dargestellte Lenkmoment-Steuereinrichtung 5 überlagert dem vom Fahrer ausgeübten Fahrer-Lenkmoment M_{F} ein Steuer-Lenkmoment M_{P} und dient so der Kraftunterstützung des Fahrers. Der Lenkvorgang lässt sich demnach für den Fahrer leichter und mit geringerem Kraftaufwand bewerkstelligen. Die in Figur 1 dargestellte Lenkmoment-Steuereinrichtung 5 ist hydraulisch ausgebildet. Sie verfügt über eine Ventil 6 sowie einen Kolben 7. Das Ventil 6 kann zum Beispiel in seiner Ventilcharakteristik elektrisch beeinflusst werden. Das Ventil 6 dient der Erzeugung des Steuer-Lenkmoments M_{P} und der Kolben 7 dient letztendlich der Überlagerung des Steuer-Lenkmoments M_{P} und des Fahrerlenkmoments M_{F} zum Gesamtlenkmoment M_{L}. Ein derartiges in Figur 1 dargestelltes Lenksystem nach dem Stand der Technik bezeichnet man auch als Power Steering Lenksystem.

Im Unterschied zum in Figur 1 dargestellten Lenksystem kann die Lenkmoment-Steuereinrichtung auch elektrisch realisiert werden.

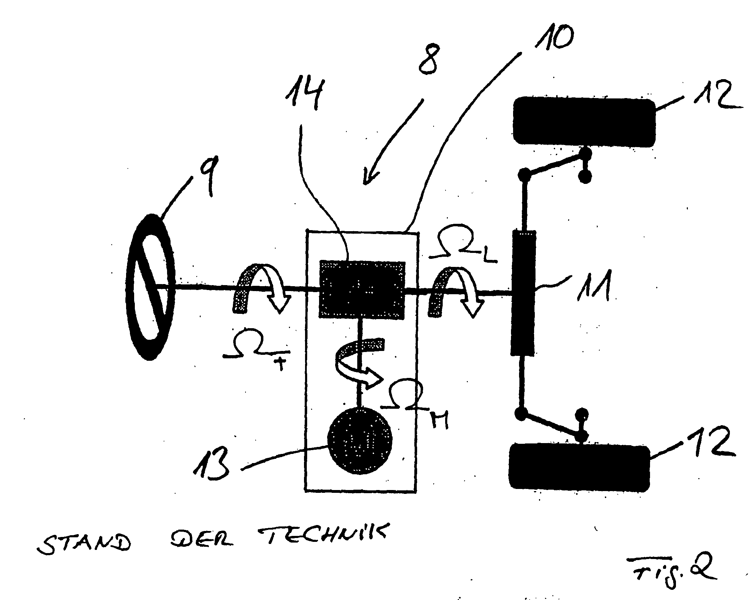

Figur 2 zeigt ein weiteres Lenksystem 8 nach dem Stand der Technik. Im Unterschied zum Lenksystem der Figur 1 wird bei dem Lenksystem 8 der Figur 2 jedoch nicht das von dem Fahrer aufgebrachte Fahrer-Lenkmoment beeinflusst, sondern vielmehr ein vom Fahrer auf ein Lenkrad 9 angelegter Fahrer-Lenkwinkel Ω_{F}. Hierzu verfügt das Lenksystem 8 der Figur 2 über eine Lenkwinkel-Steuereinrichtung 10. Die Lenkwinkel-Steuereinrichtung 10 überlagert demnach dem Fahrer-Lenkwinkel Ω_{F} einen Steuer-Lenkwinkel Ω_{M} und erzeugt so einen Gesamtlenkwinkel Ω_{L}, der auf ein Lenkgetriebe 11 des Lenksystems 8 der Figur 2 übertragen wird. Am Lenkgetriebe 11 greifen wiederum Räder 12 an, die letztendlich über das Lenksystem beeinflusst werden sollen. Die Lenkwinkel-Steuereinrichtung 10 umfasst vorzugsweise einen elektrischen Motor 13 zur Erzeugung des Steuer-Lenkwinkels Ω_{M} und über ein Getriebe 14, um den Steuer-Lenkwinkel Ω_{M} mit dem Fahrer-Lenkwinkel Ω_{F} zum Gesamtlenkwinkel Ω_{L} zu überlagern.

Mit Hilfe des in Figur 2 gezeigten Lenksystems 8 nach dem Stand der Technik lässt sich demzufolge der vom Fahrer aufgebrachte Fahrer-Lenkwinkel gezielt beeinflussen. Ein derartiges Lenksystem bezeichnet man auch als Active Steering Lenksystem.

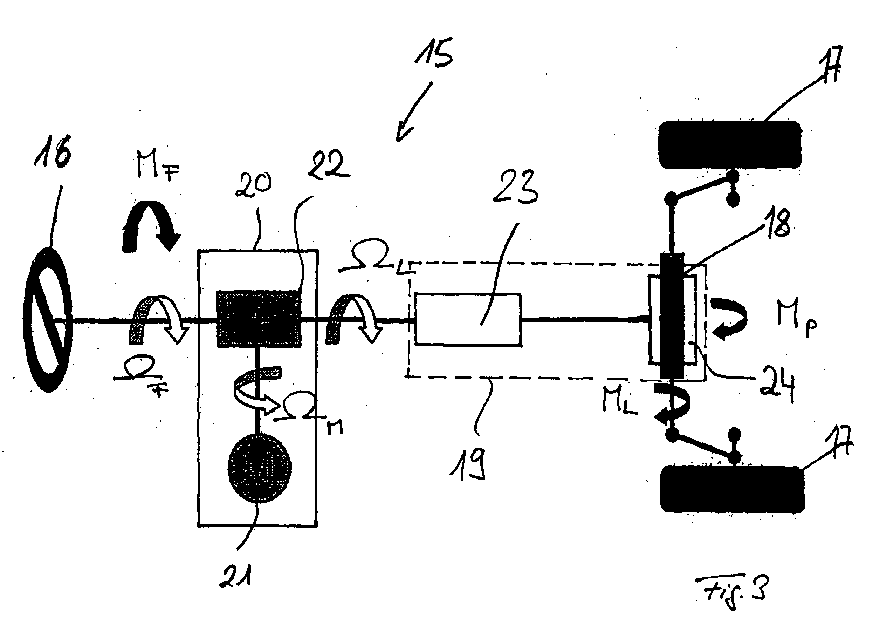

Figur 3 zeigt ein Lenksystem 15 im Sinne der Erfindung. Ein von einem Fahrer auf eine Lenkeinrichtung 16, nämlich ein Lenkrad, aufgebrachter Fahrer-Lenkwinkel Ω_{F} sowie ein vom Fahrer aufgebrachtes Fahrer-Lenkmoment M_{F} werden zur Beeinflussung von Rädern 17 des Kraftfahrzeugs auf ein Lenkgetriebe 18 übertragen. Das erfindungsgemäße Lenksystem 15 verfügt über eine Lenkmoment-Steuereinrichtung 19 sowie zusätzlich über eine Lenkwinkel-Steuereinrichtung 20. Die Lenkwinkel-Steuereinrichtung 20 ist zwischen der Lenkeinrichtung 16 und der Lenkmoment-Steuereinrichtung 19 positioniert. Die Lenkmoment-Steuereinrichtung 19 ist zwischen der Lenkwinkel-Steuereinrichtung 20 und dem Lenkgetriebe 18 positioniert.

Es liegt demnach im Sinne der Erfindung, ein Lenksystem 15 vorzuschlagen, das sowohl über die Lenkmoment-Steuereinrichtung 19 als auch über die Lenkwinkel-Steuereinrichtung 20 verfügt, wobei sämtliche Komponenten der Lenkmoment-Steuereinrichtung 19 in Wirkrichtung nach der Lenkwinkel-Steuereinrichtung 20 angeordnet sind, so dass sämtliche Baugruppen der Lenkwinkel-Steuereinrichtung 20 zwischen der Lenkeinrichtung 16 und der Lenkmoment-Steuereinrichtung 19 angeordnet sind.

Wie Figur zeigt, verfügt die Lenkwinkel-Steuereinrichtung 20 wiederum über einen Motor 21 und ein Getriebe 22, um dem vom Fahrer aufgebrachten Fahrer-Lenkwinkel Ω_{F} einen Steuer-Lenkwinkel Ω_{M} zur Bildung des Gesamtlenkwinkels Ω_{L} zu überlagern. Die Lenkmoment-Steuereinrichtung 19 ist im Ausführungsbeispiel der Figur 3 wiederum hydraulisch ausgebildet, sie verfügt demnach über ein Ventil 23 und einen Kolben 24. Hierdurch kann dem vom Fahrer aufgebrachten Fahrer-Lenkmoment M_{F} zur Bildung des Gesamtlenkmoments M_{L} das Steuer-Lenkmoment Mp überlagert werden.

An dieser Stelle sei der Vollständigkeit halber angemerkt, dass die Lenkmoment-Steuereinrichtung selbstverständlich auch elektrisch ausgebildet sein kann.

Mit Hilfe des erfindungsgemäßen Lenksystems können demnach der Lenkwinkel als auch das Lenkmoment als physikalische Parameter des Lenkvorgangs beeinflusst werden. Hierdurch lässt sich der Gesamtlenkwinkel Ω_{L} durch Überlagerung des Fahrer-Lenkwinkels Ω_{F} und des Steuer-Lenkwinkels Ω_{M} sowohl derart beeinflussen, dass dem Lenkrad 16 maximal das ausgeübte Fahrer-Lenkmoment M_{F} beaufschlagt wird, als auch derart beeinflussen, dass dem Lenkrad 16 zumindest ein Teil des Steuer-Lenkmoments M_{P} zusätzlich zum Fahrer-Lenkmoment M_{F} beaufschlagt wird. Mit Hilfe des erfindungsgemäßen Lenksystems ist demnach eine Lösung realisierbar, bei welcher vom Lenksystem vorgenommene Lenkkorrekturen entweder dem Fahrer rückgemeldet werden oder dem Fahrer verborgen bleiben. Hierdurch wird eine betriebspunktabhängige progressive Lenkung realisiert.

### Bezugszeichenliste

- Lenksystem: 1
- Lenkeinrichtung: 2
- Lenkgetriebe: 3
- Rad: 4
- Lenkmoment-Steuereinrichtung: 5
- Ventil: 6
- Koben: 7
- Lenksystem: 8
- Lenkeinrichtung: 9
- Lenkwinkel-Steuereinrichtung: 10
- Lenkgetriebe: 11
- Rad: 12
- Motor: 13
- Getriebe: 14
- Lenksystem: 15
- Lenkeinrichtung: 16
- Rad: 17
- Lenkgetriebe: 18
- Lenkmoment-Steuereinrichtung: 19
- Lenkwinkel-Steuereinrichtung: 20
- Motor: 21
- Getriebe: 22
- Ventil: 23
- Kolben: 24

## Patentansprüche

1. Lenksystem für ein Kraftfahrzeug, mit einer von einem Fahrer des Kraftfahrzeugs betätigbaren Lenkeinrichtung (16), wobei über die Lenkeinrichtung vom Fahrer ein Fahrer-Lenkmoment (M_{F}) und ein Fahrer-Lenkwinkel (Ω_{F}) an ein Lenkgetriebe (18) anlegbar sind, mit einer Lenkmoment-Steuereinrichtung (19), wobei mit der Lenkmoment-Steuereinrichtung (19) dem vom Fahrer ausgeübten Fahrer-Lenkmoment (M_{F}) ein Steuer-Lenkmoment (M_{P}) überlagerbar ist, wobei eine Lenkwinkel-Steuereinrichtung (20), die dem vom Fahrer ausgeübten Fahrer-Lenkwinkel (Ω_{F}) einen Steuer-Lenkwinkel (Ω_{M}) überlagert, wobei die Lenkwinkel-Steuereinrichtung (20) zwischen der Lenkeinrichtung (16) und der Lenkmoment-Steuereinrichtung (19) und die Lenkmoment-Steuereinrichtung (19) zwischen der Lenkwinkel-Steuereinrichtung (20) und dem Lenkgetriebe (18) angeordnet ist, **dadurch gekennzeichnet, dass** in dem Fall, in welchem von der Lenkwinkel-Steuereinrichtung (20) dem vom Fahrer ausgeübten Fahrer-Lenkwinkel (Ω_{F}) ein Steuer-Lenkwinkel (Ω_{M}) überlagert wird, entweder dem Fahrer-Lenkmoment (M_{F}) ein Steuer-Lenkmoment (M_{P}) derart überlagert wird, dass der Lenkeinrichtung (16) maximal das ausgeübte Fahrer-Lenkmoment (M_{F}) beaufschlagt wird, oder dem Fahrer-Lenkmoment (M_{F}) ein Steuer-Lenkmoment (M_{P}) derart überlagert wird, dass der Lenkeinrichtung (16) das ausgeübte Fahrer-Lenkmoment (M_{F}) und zumindest ein Teil des Steuer-Lenkmoments (M_{P}) beaufschlagt wird.

2. Lenksystem nach Anspruch 1, **dadurch gekennzeichnet, dass** die Lenkwinkel-Steuereinrichtung (20) einen Motor (21) zur Erzeugung des Steuer-Lenkwinkels (Ω_{M}) und ein Getriebe (22) zur Überlagerung des Steuer-Lenkwinkels (Ω_{M}) und des Fahrer-Lenkwinkels (Ω_{F}) aufweist, wobei sowohl der Motor (21) als auch das Getriebe (22) zwischen der Lenkeinrichtung (16) und der Lenkmoment-Steuereinrichtung (19) angeordnet sind.

3. Lenksystem nach Anspruch 1 oder 2, **dadurch gekennzeichnet, dass** die Lenkmoment-Steuereinrichtung (19) hydraulisch ausgebildet ist und ein Ventil (23) zur Erzeugung des Steuer-Lenkmoments (M_{P}) und einen Kolben (24) zur Überlagerung des Steuer-Lenkmoments (M_{P}) und des Fahrer-Lenkmoments (M_{F}) aufweist, wobei sowohl das Ventil (23) als auch der Kolben (24) zwischen der Lenkwinkel-Steuereinrichtung (20) und dem Lenkgetriebe (18) angeordnet sind.

4. Lenksystem nach Anspruch 1 oder 2, **dadurch gekennzeichnet, dass** die Lenkmoment-Steuereinrichtung (19) elektrisch ausgebildet ist und die Baugruppen derselben alle zwischen der Lenkwinkel-Steuereinrichtung (20) und dem Lenkgetriebe (18) angeordnet sind.

## Claims

1. Steering system for a motor vehicle with a driver input (16) which can be operated by the driver of the motor vehicle, wherein above the driver input, a driver steering torque (M_{F}) and a driver steering angle (Ω_{M}) can be connected to a steering drive system (18) with a steering torque controller (19); wherein with the steering torque controller (19), a steering torque can be superimposed on the driver steer torque ( M_{F}) applied by the driver; wherein a steering angle controller (20) through which a steering angle (Ω_{M}) can be superimposed on the steering angle applied by the driver (Ω_{M}); wherein the steering angle controller (20) is configured between the driver input (16) and the steering torque controller and the steering torque controller (19) is positioned between the steering angle controller (20) and the steering drive system (18); this is **characterized in that** in the case of a steering angle (Ω_{M}) being superimposed on a driver-applied steering angle by the steering angle controller (20), either the steering torque is superimposed on the driver steering torque (M_{F}) in such a way that the driver input (16) is charged by, at most, the applied driver steering torque (M_{F}) or, alternatively, the steering torque is superimposed on the driver steering torque in such a way that the driver input (16) is charged by the applied driver steering torque (M_{F}) and at least a part of the steering torque (M_{F}).

2. Steering system according to claim 1 **characterized in that** the steering angle controller (20) comprises a motor (21) for the production of a steering angle (Ω_{M}) and a system (22) for the superimposing of the steering angle (Ω_{M}) and the driver steering angle (Ω_{M}), wherein the motor (21) as well as a system (22) are configured between the driver input (16) and the steering torque controller (19).

3. Steering system according to claim 1 or 2, **characterized in that** the steering torque controller (19) is configured hydraulically and comprises a valve (23) for the production of the steering torque and a piston (24) for superimposing the steering torque and the driver applied steering torque (M_{F}), wherein the valve (23) as well as the piston (24) are configured between the steering angle controller (20) and the steering operation (18).

4. Steering system according to claim 1 or 2, **characterized in that** the steering torque controller (19) is configured electronically and the building groups of these are all configured between the steering angle controller (20) and the steering system (18).

## Revendications

1. Système de direction pour véhicule à moteur avec un dispositif de direction (16), capable d'être actionner par un conducteur du véhicule à moteur, étant donné que, à travers le dispositif de direction (16), un couple de braquage du conducteur (M_{F}) et un angle de braquage du conducteur (Ω_{F}) peuvent être, ajuster dans un boîtier de direction (18), avec un dispositif de commande pour le couple de braquage (19), étant donné que, avec le dispositif de commande pour le couple de braquage (19), le couple de braquage exercé du conducteur (M_{F}) peut être superposé par un couple de braquage par commande (M_{P}), de même qu'avec un dispositif de commande pour l'angle de braquage (20) l'angle de braquage exercé du conducteur (Ω _{F}) peut être superposé par un angle de braquage par commande (Ω_{M}), étant donné que le dispositif de commande pour l'angle de braquage (20) est disposé entre le dispositif de direction (16) et le dispositif de commande pour le couple de braquage (19) alors que le dispositif de commande pour le couple de braquage (19) est disposé entre le dispositif de commande pour l'angle de braquage (20) et le boîtier de direction (18), **est caractérisé en ce que** dans le cas où l'angle de braquage exercé du conducteur (Ω_{F}) est superposé, à partir du dispositif de commande pour l'angle de braquage (20), par un angle de braquage par commande (Ω_{M}), alors ou bien le couple de braquage exercé du conducteur (M_{F}) est superposé par un couple de braquage par commande (M_{P}), de telle façon que le dispositif de direction (16) est alimenté de façon maximale par le couple de braquage exercé du conducteur (M_{F}), ou bien le couple de braquage exercé du conducteur (M_{F}) est superposé par un couple de braquage par commande (M_{P}), de telle façon que le dispositif de direction (16) est alimenté par le couple de braquage exercé du conducteur (M_{F}) et au moins une partie du couple de braquage par commande (M_{P}).

2. Système de direction selon revendication 1, **caractérisé en ce que** le dispositif de commande pour l'angle de braquage (20) est doté d'un moteur (21) pour la production d'un angle de braquage par commande (Ω_{M}) et d'une boite de vitesse (22) pour la superposition de l'angle de braquage par commande (Ω_{M}) et de l'angle de braquage exercé du conducteur (Ω _{F}), étant donné que le moteur (21) aussi bien que la boite de vitesse (22) sont disposés entre le dispositif de direction (16) et le dispositif de commande pour le couple de braquage (19).

3. Système de direction selon revendication 1 ou 2, **caractérisé en ce que** le dispositif de commande pour le couple de braquage (19) est présenté sous forme d'un système hydraulique doté d'un soupape (23) pour la production du couple de braquage par commande (M_{P}) et d'un piston (24) pour la superposition du couple de braquage par commande (M_{P}) et du couple de braquage exercé du conducteur (M_{F}), étant donné que le soupape (23) aussi bien que le piston (24) sont disposés entre le dispositif de commande pour l'angle de braquage (20) et le boîtier de direction (18).

4. Système de direction selon revendication 1 ou 2, **caractérisé en ce que** le dispositif de commande pour le couple de braquage (19) est présenté sous forme d'un système électrique et que les modules de construction eux même, sont disposés tous entre le dispositif de commande pour l'angle de braquage (20) et le boîtier de direction (18).
